# EUROPÄISCHE PATENTSCHRIFT

(11) **EP 0 575 441 B1**
(45) Veröffentlichungstag und Bekanntmachung des Hinweises auf die Patenterteilung: **24.05.1995**
(21) Anmeldenummer: 92906899.7
(22) Anmeldetag: 19.03.1992
(51) Int. Cl.: B09B 1/00, E02D 31/00, G01M 3/02

(54) **ELEMENT ZUM ABDICHTEN UND ÜBERWACHEN EINES KÖRPERS, INSBESONDERE EINER ABFALLDEPONIE**
ELEMENT FOR SEALING AND MONITORING A BODY, IN PARTICULAR A REFUSE DUMP
ELEMENT POUR L'ETANCHEIFICATION ET LA SURVEILLANCE D'UN CORPS, EN PARTICULIER D'UNE DECHARGE DE DECHETS

(30) Priorität: 22.03.1991 DE 4109520; 21.06.1991 DE 9107693 U
(43) Veröffentlichungstag der Anmeldung: 29.12.1993
(73) Patentinhaber: SIEMENS AKTIENGESELLSCHAFT, 80333 München (DE)
(72) Erfinder: RUTHROF, Klaus, D-8500 Nürnberg (DE); JAX, Peter, D-8520 Erlangen (DE); BODE, Karl-Heinz, D-8070 Ingolstadt (DE); GÜNTHER, Klaus, D-2000 Hamburg 67 (DE)
(86) Internationale Anmeldenummer: DE9200236
(87) Internationale Veröffentlichungsnummer: WO9216316

(56) Entgegenhaltungen:
- EP-A- 0 251 026
- EP-A- 0 262 290
- DE-A- 2 431 907
- DE-A- 3 540 715
- DE-A- 3 737 569
- DE-A- 3 811 487
- DE-A- 3 831 188
- BAUMASCHINE + BAUTECHNIK - BMT. Bd. 34, No. 4, April 1987, WIESBADEN DE Seiten 196 - 200; L. FENSCH: 'Die Rollins-Hochdeponie mit neuen Kontrollsystemen' see page 198, left hand column, line 28 - right hand column, line 16 see page 199, left hand column, line 6 - line 37 see figures 4, 5

## Beschreibung

Die Erfindung betrifft ein Element zum Abdichten und Überwachen eines Körpers mit zwei Abdichtungen, die an ihren Rändern unter Freilassung einer Eintrittsöffnung und einer Austrittsöffnung für ein Medium dicht miteinander verbunden sind, wobei an die Austrittsöffnung mindestens ein Sensor anschließbar ist.

Aus der DE 37 37 569 A1, von welcher der Oberbegriff des Anspruchs 1 ausgeht, ist eine Vorrichtung zur Basisabdichtung von Lagerstätten bekannt. Dabei sind zwei großflächige Abdichtungen an ihren Rändern unter Freilassung einer Eintrittsöffnung und einer Austrittsöffnung für ein Medium dicht miteinander verbunden. Der Zwischenraum wird von dem Medium, das Luft sein kann, durchströmt. Über die Austrittsöffnung gelangt das Medium zu einem Sensor, wo ein eingedrungener Stoff gaschromatographisch identifiziert werden kann. Mit dieser Vorrichtung kann erkannt werden, ob ein Stoff duch ein Leck in einer der beiden Abdichtungen in den Hohlraum eingedrungen ist. Das Leck kann aber nicht lokalisiert werden.

Aus BMT, Band 34, Nr. 4, April 1987, Seiten 196 bis 200, ist eine einfache Abdichtung, die nur aus einer Folie besteht, bekannt. Dieser Folie ist eine Einrichtung zur Leckageortung zugeordnet. Da sich die Einrichtung zur Leckageortung in einer Filterschicht befindet, die in der Regel aus Sand besteht und keinen homogenen Strömungswiderstand hat, kann nach einem Leck in der Folie ein durch das Leck hindurchtretender Stoff durch die Filterschicht wandern bis er an einer unbestimmten Stelle detektiert wird. Es handelt sich beim Bekannten nicht um ein handliches Element aus zwei Abdichtungen, das zuverlässig abdichtet und leicht zu verlegen wäre. Es handelt sich vielmehr um eine einfache Zuordnung einer Folie und eines Ortungssystems.

Eine ähnliche Einrichtung wie die aus BMT, Band 34, Nr. 4, April 1987, Seiten 196 bis 200, ist auch aus dem Siemens-Prospekt "Deponie-Langzeitüberwachung mit LEOS", Bestell-Nr. A 19100-U653-A 222, Juli 1990, zu entnehmen. Aus diesem Prospekt ist eine Einrichtung zum Abdichten einer Mülldeponie sowie zur Leckage-Erkennung und -Ortung bekannt. Dabei ist vorgesehen, daß die Mülldeponie mit einer wasserdichten Folie, Dichtungsbahn (insbesondere aus Kunststoff) oder "Abdichtung" versehen ist. Diese Abdichtung kann unterhalb des Müllkörpers angeordnet sein (Basisabdichtung), damit keine Schadstoffe in das Grundwasser gelangen können. Die Abdichtung kann aber auch oberhalb des Müllkörpers verlegt sein (Oberflächenabdichtung), um das Eintreten von Regenwasser und damit das Auswaschen von Schadstoffen aus dem Müll zu verhindern. Um ein Leck (eine Schadstelle) in dieser Abdichtung frühzeitig zu erkennen, ist bei der genannten Einrichtung die Verlegung von sogenannten LEOS-Schläuchen vorgesehen und zwar auf der vom Müllkörper abgewandten Seite der Abdichtung. Die LEOS-Schläuche, die mäanderförmig verlegt, mit Luft gefüllt und deren Wandung für verschiedene, in der Deponie vorhandene Stoffe durchlässig sind, sind an ein zentrales Überwachungssystem angeschlossen. Bei einer Plazierung der Abdichtung unterhalb des Müllkörpers wird eine Schadstelle darin durch Detektion von im Sickerwasser gelösten Stoffen lokalisiert. Und bei einer Plazierung der Abdichtung oberhalb des Müllkörpers wird eine Schadstelle darin durch Detektion von aufsteigenden Faulgasen lokalisiert.

Ein LEOS-Schlauch sowie eine Einrichtung, die zu seinem Betrieb dient, sind aus der DE-PS 24 31 907 bekannt. Es handelt sich dabei um einen Schlauch, der für Schadstoffe durchlässig ist. Am einen Ende des Schlauches ist eine Pumpe angeordnet, mit der einzelne Volumen eines Mediums, z.B. einzelne Gasvolumen, in zeitlichen Abständen nacheinander durch den Schlauch hindurch befördert werden. Der Schlauch wird auf diese Weise in regelmäßigen zeitlichen Abständen, d.h. mit gleichbleibender Spülfrequenz, für eine Zeit lang gespült. Am anderen Ende des Schlauches befinden sich für Schadstoffe empfindliche Sensoren. Falls in die Umgebung des Schlauches ein Schadstoff gelangt, dringt dieser Schadstoff in den Schlauch ein; er wird mit dem nächsten Pumpvorgang des Mediums zu den Sensoren gebracht. Da das Medium dabei mit einer bekannten Geschwindigkeit strömt, läßt sich aus der Differenz zwischen dem Einschaltzeitpunkt der Pumpe und dem Ansprechzeitpunkt der Sensoren genau der Ort bestimmen, an dem zwischen zwei Spülungen ein Schadstoff in den Schlauch gelangt ist. Außerdem läßt sich die Schadstoffmenge bestimmen.

Falls ein Leck in der Abdichtung nicht unmittelbar in der Nähe des LEOS-Schlauchs auftritt, verteilt sich der zu detektierende ausgetretene Stoff über ein größeres Gebiet, bevor er den LEOS-Schlauch erreicht. Bei unterschiedlichen Ausbreitungsgeschwindigkeiten in diesem Gebiet kann der Stoff den LEOS- Schlauch an mehreren Stellen gleichzeitig erreichen. Auch kann der zu detektierende Stoff den LEOS-Schlauch erst an einer relativ weit vom Leck entfernten Stelle erreichen. Im übrigen kann der Stoff zwischen zwei Spülungen einen relativ großen Schlauchabschnitt erreichen und eindiffundieren. Dann kann nur festgestellt werden, daß das Leck irgendwo im Bereich dieses Abschnitts liegt. Die Bestimmung des Leckortes kann folglich einen relativ großen Fehler aufweisen. Mit der bekannten Einrichtung kann ein Leck in der Abdichtung nicht immer genau lokalisiert werden. Im übrigen erfordert das Verlegen der Abdichtung und der LEOS-Schläuche zwei Arbeitsgänge.

Der Erfindung liegt die Erkenntnis zugrunde, daß es sinnvoll ist, einen verstärkten Schutz durch eine Doppelbarriere zu schaffen. Dies wäre sowohl bei der Basisabdichtung als auch bei der Oberflächenabdichtung einer Deponie zweckmäßig. Sie beruht weiter auf der Überlegung, daß es dann auch sinnvoll ist, die Ausgestaltung so vorzunehmen, daß meßtechnisch zu erfassen ist, ob die eine oder andere Barriere ein Leck aufweist und wo dieses Leck gelegen ist.

Der Erfindung liegt die Aufgabe zugrunde, ein Element zum Abdichten und Überwachen eines Körpers anzugeben, mit dem der Ort eines Lecks recht genau zu lokalisieren und mit dem durch Verwendung von zwei Barrieren ein doppelter Leckschutz gewährleistet ist. Das Element soll schnell und zuverlässig zu verlegen sein.

Diese Aufgabe wird gemäß der Erfindung durch ein Element gelöst, das dadurch gekennzeichnet ist, daß zwei Abdichtungen durch Stützelemente voneinander beabstandet angeordnet sind, daß mindestens ein Kanal zwischen den Abdichtungen und den Stützelementen gebildet ist, der die Eintrittsöffnung und die Austrittsöffnung miteinander verbindet, und daß die Stützelemente aus einem strömungsdurchlässigen, aber strömungsbehindernden Material mit bekanntem Strömungswiderstand bestehen.

Mit diesem Element wird der Vorteil erzielt, daß ein zu detektierender Stoff nach Auftreten eines Lecks in einer der Abdichtungen in definierter Weise zum Kanal geführt wird. Der Stoff fließt nicht durch eine Umgebung, deren Struktur unbekannt ist, sondern dringt durch die Stützelemente hindurch zum Kanal vor. Der Strömungswiderstand der Stützelemente oder der Hohlräume in den Stützelementen ist bekannt und zumindest in Richtung jeder Achse des Stützelements konstant. Der eingedrungene Stoff gelangt vom Leck in der Abdichtung zuerst auf dem kürzesten Weg, nämlich senkrecht zum Kanal, in den Kanal. Erst danach trifft der eingedrungene Stoff an benachbarten Stellen am Kanal ein. Im Zeitraum zwischen dem Auftreten des Lecks und der nächsten Spülung bildet sich im Kanal eine Stoffverteilung mit einem Maximum, das beim Spülen und Detektieren den Ort des Lecks anzeigt. Bei kleinem Strömungswiderstand des Stützelements sind die zeitlichen Unterschiede zwischen dem Eintreffen über den direkten Weg und über die etwas längeren Wege sehr gering. Es könnte sich dann im Zeitraum zwischen dem Auftreten des Lecks und der nächsten Spülung im Kanal eine breite, flache Stoffverteilung ausbilden, deren Maximum nicht zu erkennen ist. Dadurch, daß jedoch gemäß der Erfindung die Stützelemente aus einem strömungsbehindernden Material bestehen, bewegt sich der eingedrungene Stoff in einem Stützelement so langsam, daß der Zeitunterschied des Eintreffens an verschiedenen Stellen des Kanals selbst bei geringem Wegunterschied meßbar groß ist. Im Zeitraum zwischen dem Auftreten des Lecks und der nächsten Spülung kann sich bei vorgegebener Spülfrequenz im Kanal eine nur schmale, steile Stoffverteilung ausbilden, deren Maximum mit dem Sensor gut zu erkennen ist. Es läßt sich folglich leicht feststellen, an welchem Ort der Stoff den Kanal zuerst erreicht hat. Das Leck muß dann auf einer Linie senkrecht zu dieser Stelle am Kanal liegen.

Es kann nur ein Sensor für einen bestimmten Stoff oder es können mehrere Sensoren für unterschiedliche Stoffe vorhanden sein.

Mit dem Element nach der Erfindung kann ein Leck in der Abdichtung gut lokalisiert werden.

Durch die feste Verbindung der Abdichtungen und der Kanäle kann das Element nach der Erfindung in nur einem Arbeitsgang schnell verlegt werden.

Falls unterhalb und oberhalb eines verlegten Elements unterschiedliche Stoffe zu erwarten sind, kann aus der Art des detektierten Stoffs geschlossen werden, ob das Leck in der oberen oder in der unteren Abdichtung vorhanden ist. Die Stoffart ist dadurch zu detektieren, daß geeignete Sensoren vorhanden sind. Beispielsweise kann ein Element gemäß der Erfindung eine Mülldeponie abdichten. Dann würde ein Eindringen von fast reinem Wasser auf ein Leck in der von dem Deponiekörper abgewandten oberen Abdichtung schließen lassen.

Beispielsweise kann der Kanal durch einen permeablen Schlauch gebildet sein. Geeignet kann der aus der DE-PS 24 31 907 bekannte Schlauch sein.

Nach einem anderen Ausführungsbeispiel kann der Kanal im Element von benachbarten Stützelementen durch permeable Diffusionsschichten abgegrenzt sein. Dann ist kein Schlauch erforderlich.

Der Schlauch kann von einem Füllmaterial umgeben sein. Als Füllmaterial oder auch als Bestandteil der Stützelemente kann ein Trockenmittel zur Beseitigung der Restfeuchte im Element eingesetzt werden. Dadurch kann die Meßgenauigkeit für durch ein Leck eingedrungene Feuchtigkeit verbessert werden. Zur Bestimmung eines Wassereinbruchs wird z.B. ein Feuchtesensor benutzt.

Die Stützelemente weisen nach einer weiteren Ausbildung senkrecht zum Kanal einen kleineren Strömungswiderstand auf als parallel zum Kanal. Hiermit wird der Vorteil erzielt, daß sich der durch ein Leck in einer Abdichtung in das Stützelement eingedrungene Stoff statt kreisförmig ellipsenkreisförmig ausbreitet. Dabei ist die große Achse der Ellipse senkrecht zum Kanal ausgerichtet. Folglich erzielt man im Kanal eine noch schmalere, steilere Stoffverteilung als bei der Verwendung eines homogenen strömungsbehindernden Materials als Stützelement, also eines Materials, das in allen Richtungen die gleiche Strömungsgeschwindigkeit zuläßt. Damit ist auch der Leckort genauer zu bestimmen.

Das Material der Stützelemente, das senkrecht zum Kanal einen kleineren Strömungswiderstand als parallel zum Kanal hat, kann beispielsweise ein senkrecht zum Kanal gerichtetes Gewebe sein. Das Material der Stützelemente kann aber auch aus senkrecht zum Kanal gerichteten Kapillaren, Röhrchen oder dergleichen aufgebaut sein.

Die beiden Abdichtungen können an ihren Rändern kanalendseitig, aber auch dort, wo keine Kanäle enden, durch aufgesteckte Profilstücke dicht miteinander verbunden sein. Solche Profilstücke sind leicht zu handhaben. Die beiden Abdichtungen können aber auch miteinander verschweißt sein.

Die Zu- und Ableitung für das Medium, das den Kanal durchströmt, können unter Bildung eines Kreislaufs miteinander verbunden sein. Im Kreislauf sind dann der Sensor und eine Pumpe angeordnet. Solange kein Leck auftritt, braucht das Medium, das den Kanal durchströmt, nicht ständig erneuert zu werden.

Der Kreislauf weist beispielsweise eine verschließbare Einspeiseöffnung und eine verschließbare Ableitöffnung auf. Zwischen der Ableitöffnung und der Einspeiseöffnung sollte der Kreislauf ganz oder teilweise verschließbar sein. Bei Bedarf kann dann Medium eingespeist und abgeleitet werden. Es kann der Kreislauf unterbrochen sein, so daß das gesamte eingespeiste Medium wieder abgeleitet wird. Es kann statt dessen bei teilweise verschlossener Verbindung zwischen Ableitöffnung und Einspeiseöffnung nur ein Teil des Mediums im Kreislauf ausgetauscht werden.

Beispielsweise ist in der Ableitung oder in einem Bypass der Ableitung ein Filter angeordnet, der die durch ein Leck in den Kreislauf eingedrungenen Stoffe entfernen kann. Ein solcher Filter kann ein katalytischer Filter sein. Insbesondere dann, wenn der Filter in einem Bypass der Ableitung angeordnet ist, kann der Filter ausgetauscht oder gereinigt werden, ohne daß die Integrität des Kreislaufs beeinträchtigt ist. Es ist unter Umständen angebracht, die beim Reinigungsvorgang aus dem Filter entfernten Stoffe zu messen. Der Filter kann dazu mit einer Reinigungsvorrichtung und einem Sensor verbunden sein, um eine empfindliche integrale Messung zu ermöglichen.

Neben der sofortigen Bestimmung eingebrachter Schadstoffe durch den Sensor kann der Schadstoffeintrag zwischen zwei Filterwechseln auch auf die geschilderte Weise ermittelt werden. Bei einem Ausfall des Sensors ist dadurch zumindest zu erkennen, ob zwischen zwei Filterwechseln ein Leck vorhanden war.

Zum Reinigen des Filters von den zurückgehaltenen Stoffen kann der Filter mit einer Heizung versehen sein. Diese Heizung dient dem Ziel, die zurückgehaltenen Stoffe durch Erwärmung freizubekommen. Der Filter kann auch mit Wasserdampf oder Wasser zu beschicken sein. Auch hiermit können die im Filter zurückgehaltenen Stoffe wieder freigesetzt werden.

Bevorzugt können mehrere der geschilderten Elemente zum Abdichten und Überwachen eines Körpers unter Bildung eines Feldes dicht miteinander verbunden sein. Dabei ist die Austrittsöffnung des Kanals des einen Elements mit der Eintrittsöffnung des Kanals eines anderen Elements verbunden. Mit einer solchen Anordnung wird der Vorteil erzielt, daß zum Abdichten einer großen Fläche, beispielsweise einer Mülldeponie, kein einstückiges großes Abdeckelement vorhanden sein muß, das schwer zu transportieren und zu handhaben wäre. Es wird der Vorteil erzielt, daß aus einzelnen handlichen Elementen mit einfachen Mitteln schnell ein Feld gebildet werden kann, das die Aufgabe eines sehr großen Elements zum Abdichten und Überwachen eines Körpers erfüllen kann.

Die benachbarten Elemente können zum Bilden eines Feldes beispielsweise miteinander verschweißt sein. Sie können jedoch auch auf andere Weise verbunden sein. Beispielsweise kann ein Profilstück, das am Rand eines Elements angeordnet ist und die beiden Abdichtungen dieses Elements aufnimmt, auch Einrichtungen zum Aufnehmen der Abdichtungen des benachbarten Elements aufweisen. Zwischen zwei benachbarten Elementen befindet sich dann also nur ein dichtendes Profilstück. Zur Gewährleistung einer besonders dichten Verbindung kann trotzdem eine Schweißnaht erforderlich sein.

Die Kanäle benachbarter Elemente können beispielsweise über Steckverbindungen miteinander verbunden sein. Es sind jedoch auch andere Verbindungsarten, z.B. Schweißverbindungen, möglich.

Die einzelnen Elemente können so zu einem Feld zusammengefügt sein, daß das gesamte Feld von nur einem Kanal durchzogen ist, der mäanderförmig das gesamte Feld erfaßt. Dann weist das gesamte Feld nur eine Zuführung und eine Ableitung auf und benötigt für alle Elemente nur einen gemeinsamen Sensor, der auch als Doppelsensor, z.B. für Wasser und Methangas, ausgebildet sein kann.

Mit einem Element gemäß der Erfindung wird der Vorteil erzielt, daß ein Leck in einer seiner Abdichtungen erfaßt und genau lokalisiert werden kann. Darüber hinaus kann durch das Erfassen, welcher Stoff eingedrungen ist, erkannt werden, ob der detektierte Stoff aus dem Inneren des überwachten Volumens oder von außen kommt. Dazu sind auf verschiedene Stoffe ansprechende Sensoren oder mehrere Sensoren für verschiedene Stoffe, z.B. für Schadstoffe oder Gase wie Methangas und für Wasser, notwendig.

Ausführungsbeispiele der Erfindung werden anhand der Zeichnung näher erläutert. Es zeigen:
Figur 1 eine oben und unten abgedichtete Mülldeponie, wobei jeweils flexible Felder aus Dichtungs- und Überwachungselementen eingesetzt sind;
Figur 2 einen Schnitt durch ein Element gemäß der Erfindung;
Figur 3 eine andere Ausführungsform eines Elements gemäß der Erfindung;
Figur 4 eine Vorrichtung mit Kanaldurchführung zum Verbinden von zwei Elementen in einer gegen Figur 2 um 90° gedrehten Darstellung;
Figur 5 eine Verbindung ohne Kanaldurchführung zwischen zwei benachbarten Elementen;
Figur 6 ein Feld aus mehreren Elementen mit einer dazugehörigen Anlage zum Betrieb; und
Figur 7 den Strömungsverlauf, der von einer Leckstelle in einem Element ausgeht.

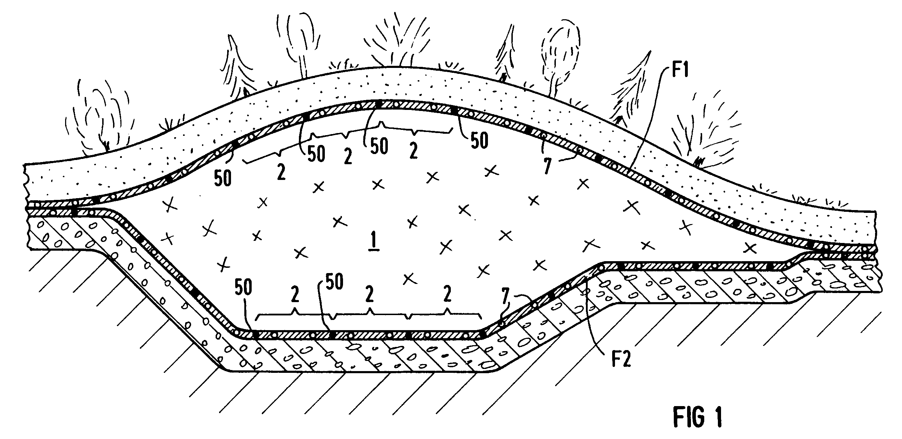

Nach Figur 1 ist eine Mülldeponie mit einem Müllkörper 1 nach oben und nach unten durch eine gemäß der Erfindung ausgestaltete Einrichtung abgedichtet. Diese Einrichtung umfaßt ein oberes Feld F1 und ein unteres Feld F2 jeweils aus kontrollierbaren Doppeldichtungen, die im folgenden als "Elemente" 2 bezeichnet werden. Diese Elemente 2, die jeweils zwei parallele Längskanäle 7 besitzen, sind jeweils an Verbindungsstellen 50 miteinander verbunden. Mit dem oberen Feld F1 wird das Eindringen von Wasser von oben in dem Müllkörper 1 und das Austreten von Deponiegas aus dem Müllkörper 1 nach oben überwacht, und eine entsprechende Leckstelle wird lokalisiert. Mit dem unteren Feld F2 wird das Austreten von Deponiegas aus dem Müllkörper 1 nach unten und das Eindringen von Feuchtigkeit von unten nach oben in den Müllkörper 1 überwacht, und ein entsprechendes Leck wird angezeigt. Jedes Feld F1, F2 umfaßt, wie später deutlich wird, zwei Barrieren für Gas und Feuchtigkeit. Das kontrollierbare obere Feld F1 ist mit Erde beschichtet, und das kontrollierbare Feld F2 lagert auf einer mineralogischen Dichtungsschicht.

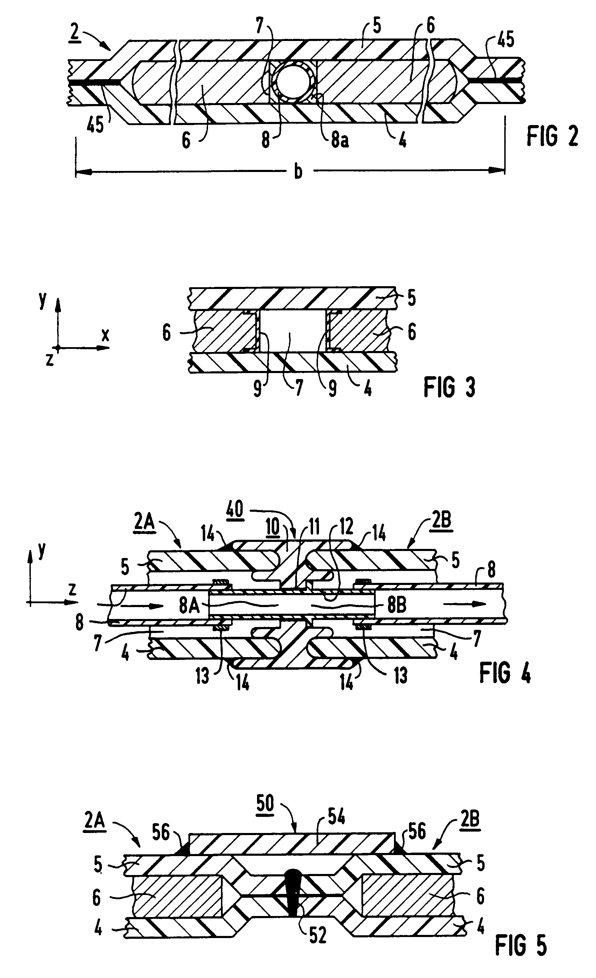

Nach Figur 2 besteht ein Element 2 aus einer unteren Abdichtung 4 und einer oberen Abdichtung 5. Die beiden undurchlässigen Folien, Dichtungsbahnen, Abdeckungen oder Abdichtungen 4 und 5, die z.B. aus Polyäthylen oder einem anderen Kunststoff bestehen, sind durch Stützelemente 6 voneinander beabstandet. Zwischen den Abdichtungen 4 und 5 und den Stützelementen 6 ist ein Kanal 7 freigelassen, der das Element 2 senkrecht zur Zeichenebene durchdringt. Es können jeweils auch zwei (vgl. Figur 1) oder mehr Kanäle 7 sein. Bis auf die Eintrittsöffnung und die Austrittsöffnung des Kanals 7 ist das Element 2 an seinen Rändern allseitig dicht verschlossen, indem beispielsweise die obere Abdichtung 5 mit der unteren Abdichtung 4 verschweißt ist. Die Schweißverbindung ist mit 45 bezeichnet. Im Kanal 7 ist nach Figur 2 ein permeabler Schlauch 8 verlegt, der der hohlen Leitung gemäß der DE-PS 24 31 907 entspricht. Es handelt sich insbesondere um einen LEOS-Schlauch. Er kann Gas und Wasserdampf über größere Längen gut transportieren. Der Schlauch 8 ist von einem Füllmaterial 8a umgeben, z.B. von Sand oder einem Trockenmittel.

Die Stützelemente 6 bestehen aus einem strömungsdurchlässigen, aber strömungsbehindernden Material. Damit ist ein Material gemeint, das zu einer nicht zu schnellen, aber auch zu einer nicht zu langsamen Ausbreitung von Wasserdampf und/oder Deponiegas führt. Die Stützelemente 6 können auch aus einem Material bestehen, das senkrecht zum Kanal 7 einen kleineren Strömungswiderstand hat als parallel zum Kanal 7. Ein solches Material kann ein gerichtetes Gewebe sein. Das Material kann auch aus parallel verlaufenden Kapillaren oder Röhrchen aufgebaut sein, die senkrecht zum Kanal 7 ausgerichtet sind. Es kann beispielsweise aus Polyäthylen oder einem anderen Kunststoff bestehen. Das Füllmaterial 8a ist ein Material, das Feuchte zurückhält. Das Füllmaterial 8a ist aber nicht zwingend erforderlich.

Die Breite b der Elemente 2 nach Figur 2 kann z.B. drei bis fünf Meter betragen. Seine Länge kann z.B. 50 Meter betragen. Solche Bahnen sind flexibel und relativ einfach zu verlegen und dann miteinander zu verbinden.

Nach Figur 3 kann auch auf den Schlauch im Kanal 7 verzichtet werden. Dann ist der Kanal 7 von den benachbarten Stützelementen 6 durch permeable Diffusionsschichten oder -wände 9 abgegrenzt. Der Kanal 7 entspricht dann den hohlen Leitungen gemäß der DE-PS 24 31 907. Die Wände 9 können prinzipiell auch entfallen.

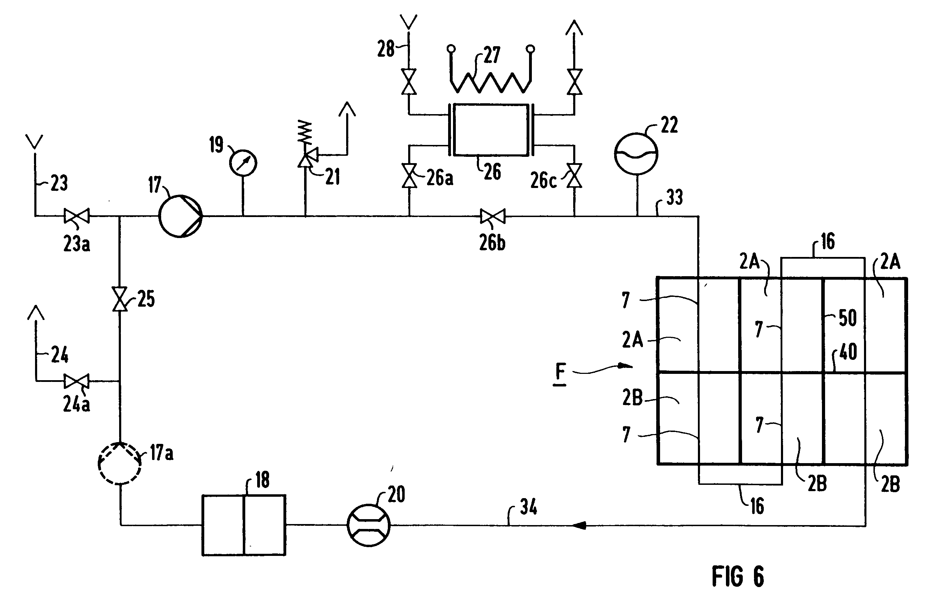

Nach Figur 4 sind die beiden Abdichtungen 4 und 5 eines ersten Elementes 2A an ihrem rechten Rand durch ein aufgestecktes, mittig durchbrochenes Profilstück 10 miteinander verbunden. Das Profilstück 10 dient gleichzeitig dazu, die Abdichtungen 4 und 5 eines benachbarten gleichartigen zweiten Elements 2B aufzunehmen. Das Profilstück 10 verbindet also die linken Ränder der Abdichtungen 4 und 5 miteinander. Damit sind auch die Elemente 2A, 2B an der Verbindungsstelle 40 miteinander verbunden. Auf diese Weise können mehrere Elemente 2 modulartig zu einer Anordnung oder einem Feld zusammengefügt werden. Zur Verbindung der Kanäle 7 oder der Schläuche 8 der beiden zu verbindenden Elemente 2A und 2B weist das Profilstück 10 eine Durchstecköffnung 11 auf. Dort ist eine starre Hülse 12 angeordnet. Sie ist in der Durchstecköffnung 11 fest verschweißt. An die Hülse 12 können beidseitig die Schläuche 8 beispielsweise durch Schellen 13 angeschlossen sein. Auf diese Weise ist die Austrittsöffnung 8A des Kanals 7 des linken Elements 2A mit der Eintrittsöffnung 8B des Kanals 7 des rechten Elements 2B verbunden. Ein Medium wie z.B. Luft kann nun unter intermittierender Saug- oder Druckwirkung von links nach rechts strömen, wie durch Pfeile angedeutet. An der in Figur 4 gezeigten Konstruktion sind oben und unten Schweißnähte 14 zum Abdichten erforderlich.

Wo keine Verbindung zwischen benachbarten Kanälen 7 erforderlich ist, können benachbarte Elemente 2 an einer Verbindungsstelle 50 auch durch eine einfache Schweißnaht 52 miteinander gekoppelt oder verbunden sein, wie in Figur 5 gezeigt. Figur 5 zeigt also eine solche Schweißverbindung zwischen benachbarten Elementen 2A, 2B außerhalb einer Kanaldurchführung. Statt einer Schweißnaht 52 unmittelbar an der Verbindungsstelle der Abdichtungen 4 und 5 kann die Verbindungsstelle 50 auch gebildet sein durch eine überdeckende Platte 54, die mit den beiden benachbarten Elementen 2A und 2B endseitig dicht verschweißt ist. Die hierzu benötigten Schweißnähte sind mit 56 bezeichnet. Statt dessen kann aber auch ein Profilstück 10 ohne Durchstecköffnung 11 verwendet werden (nicht gezeigt).

Nach Figur 6 kann eine Anordnung gewählt sein, bei der die Elemente 2 zu einem Feld F miteinander verbunden sind. Die Kanäle 7 sind in Mäanderform durch das Feld F hindurchgeführt. Dazu sind U-förmige Verbindungsteile 16 für die Reihen der Elemente 2A, 2B erforderlich. Prinzipiell können die Kanäle 7 auch mäanderförmig in jedem Element 2A, 2B angeordnet sein. Die Kanäle 7 sind Bestandteil eines Kreislaufs für ein geeignetes Medium, das beispielsweise trockene Luft ist. Im Kreislauf sind eine Pumpe 17 und ein oder mehrere Detektoren oder Sensoren 18 für zu detektierende Stoffe angeordnet. Bei mehreren Sensoren 18 sprechen diese auf unterschiedliche Stoffe an. Bevorzugt sind - wie gezeigt - zwei Sensoren 18 vorgesehen, die z.B. in Reihe geschaltet sind. Der eine Sensor 18 spricht auf Gas (Deponiegas, insbesondere Methangas) an, und der andere Sensor 18 weist Feuchtigkeit (Wasser) nach. Außerdem können ein Druckmesser 19, ein Strömungsmesser 20 und ein Sicherheitsventil 21 sowie ein Druckhalter 22 vorhanden sein.

Im Kreislauf wird das Medium, wie aus der DE-PS 24 31 907 bekannt, in regelmäßigen Abständen durch die Elemente 2A, 2B geleitet (intermittierender Betrieb). Dabei wird einige Zeit lang gepumpt und dann in eine Zeitlang gewartet, bis sich eventuell Material durch Diffusion im Kanal 7 eines schadhaften Elements 2A, 2B gesammelt hat. Bei einem Leck in einem der Elemente 2A, 2B wird der eingedrungene Stoff in der nächsten Pumpphase im Doppelsensor 18 detektiert. Beispielsweise weist der Kreislauf eine Zuleitung 23 für Luft und eine Ableitung 24 für Luft auf, die mit Ventilen 23a bzw. 23b versehen sind. Zwischen der Zuleitung 23 und der Ableitung 24 kann der Kreislauf durch ein weiteres Ventil 25 teilweise oder ganz verschlossen werden. Dadurch steht wahlweise ein geschlossener Kreislauf, ein teilweise offener Kreislauf oder ein offener Kreislauf zur Verfügung. Die Pumpe 17 kann statt als Druckpumpe hinter der Zuleitung 33 auch als Saugpumpe 17a vor der Ableitung 34 angeordnet sein. Zur Reinigung des Mediums im Kreislauf ist in einem Bypass ein Filter 26 angeordnet. Der Filter 26 kann ein mechanischer Filter, ein absorptiv wirkendesd Filter (Molekularsieb, Kohlefilter, Silikagel etc.) oder ein Filter, das mit katalytischer Verbrennung arbeitet, sein. Dieser Filter 26 kann zur Reinigung durch Armaturen 26a, 26b, 26c vom Kreislauf abgetrennt werden. Zum Reinigen ist eine Heizung 27 für den Filter 26 vorhanden. Die entfernten Stoffe werden über eine Spülleitung 28 abgeleitet oder weiteren Sensoren zur integralen Messung zugeführt. Der Spülleitung 28 kann auch heißes Wasser oder Dampf zum Austreiben der nachzuweisenden Stoffe zugeführt werden.

Da das Medium in festen zeitlichen Abständen durch den Kreislauf hindurchgeführt wird (Spülungen), kann aus dem Zeitpunkt der Detektion einer Substanz im Sensor 18 auf den Ort des Lecks in einem der Elemente 2A, 2B geschlossen werden. Bei einem Leck in einer Abdichtung 4 oder 5 des Elementes 2A oder B gelangt der eingedrungene Stoff nach einer gewissen Zeitspanne in den Kanal 7 und wird von dort mit dem Medium zum Sensor 18 transportiert. Außerdem läßt sich bei Verwendung von zwei Sensoren 18 erkennen, ob die untere oder die obere Abdichtung 4 bzw. 5 eines Elements 2 defekt ist. Aus der Art der Substanz, die eindringt (z.B. Gas oder Wasser), kann festgestellt werden, daß diese von oben oder unten gekommen sein muß.

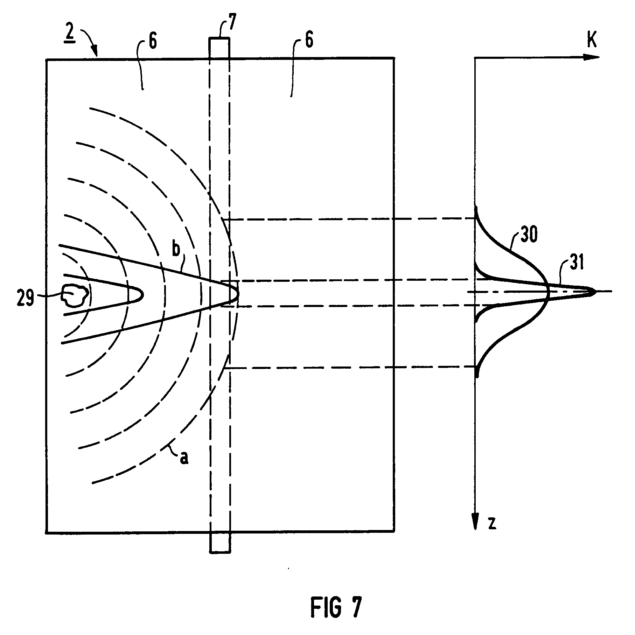

Figur 7 zeigt, daß aufgrund der aus einem strömungsbehindernden Material bestehenden Stützelemente 6 sich der eingedrungene Stoff von einer Leckstelle 29 aus langsam kreisförmig (vgl. Kreis a) und gleichmäßig ausbreitet. Dadurch ist gewährleistet, daß der an der Leckstelle 29 eingedrungene Stoff den Kanal 7 zuerst über den kürzesten Weg, d.h. senkrecht zum Kanal 7, erreicht. Darüber hinaus ist gewährleistet, daß zwischen dem Auftreten des Lecks und der nächsten Spülung des Kanals 7 nur ein kleiner Abschnitt des Kanals 7 den Stoff aufnimmt. Es ergibt sich im Kanal 7 unmittelbar vor der nächsten Spülung eine Verteilung 30 des Stoffes, wie wie in Figur 7 dargestellt ist. Dabei ist K die Konzentration des Stoffes im Kanal 7, und z ist der Ort im Kanal 7. Diese Verteilung K(z) gelangt zum Einfach- oder Doppelsensor 18 (Figur 6). Dort ist bei relativ breiter Verteilung 30 das Maximum und damit der Ort des Lecks nur relativ genau zu bestimmen. Die Genauigkeit kann vergrößert werden, wenn das Material der Stützelemente 6 senkrecht zum Kanal 7 einen kleineren Strömungswiderstand hat als parallel zum Kanal 7. Dann breitet sich der durch die Leckstelle 29 eingedrungene Stoff nämlich mit der Form einer Ellipse (vgl. Ellipse b) aus, deren große Achse senkrecht zum Kanal 7 angeordnet ist. Daraus folgt, daß der Stoff im Zeitraum zwischen dem Auftreten des Lecks und der nächsten Spülung des Kanals 7 nur eine relativ kleine Teilstrecke des Kanals 7 erreicht und belegt. Es ergibt sich unmittelbar vor der nächsten Spülung im Kanal 7 eine Verteilung 31 mit einem scharfen Maximum. Dieses kann im Sensor 18 (Figur 6) genauer bestimmt werden. Mit der gleichen Genauigkeit läßt sich der Ort des Lecks bestimmen.

Mit einem Element 2 nach der Erfindung kann ein Leck (oder mehrere Leckagen) in einer Abdichtung 4, 5 sehr genau geortet werden. Je nach der Zusammensetzung des eindringenden Mediums kann auch unterschieden werden, ob das Leck in der oberen Abdichtung 5 oder in der unteren Abdichtung 4 aufgetreten ist. Es kann der Punkt im Kanal 7 bestimmt werden, der der Leckstelle 29 am nächsten liegt.

## Patentansprüche

1. Element (2) zum Abdichten und Überwachen eines Körpers (1) mit zwei Abdichtungen (4, 5), die an ihren Rändern unter Freilassung einer Eintrittsöffnung und einer Austrittsöffnung für ein Medium dicht miteinander verbunden sind, wobei an die Austrittsöffnung mindestens ein Sensor (18) anschließbar ist,
**dadurch gekennzeichnet,** daß die beiden Abdichtungen (4, 5) durch Stützelemente (6) voneinander beabstandet angeordnet sind, daß mindestens ein Kanal (7) zwischen den Abdichtungen (4, 5) und den Stützelementen (6) gebildet ist, der die Eintrittsöffnung und die Austrittsöffnung miteinander verbindet, und daß die Stützelemente (6) aus einem strömungsdurchlässigen, aber strömungsbehindernden Material mit bekanntem Strömungswiderstand bestehen.

2. Element (2) nach Anspruch 1,
**dadurch gekennzeichnet,** daß der Kanal (7) von den benachbarten Stützelementen (6) durch permeable Diffusionsschichten (9) abgegrenzt ist.

3. Element (2) nach Anspruch 1,
**dadurch gekennzeichnet,** daß der Kanal (7) durch einen permeablen Schlauch (8) gebildet ist oder einen solchen Schlauch (8) umfaßt.

4. Element (2) nach Anspruch 3,
**dadurch gekennzeichnet,** daß der Schlauch (8) von einem Füllmaterial (8a) umgeben ist.

5. Element (2) nach einem der Ansprüche 1 bis 4,
**dadurch gekennzeichnet,** daß die Stützelemente (6) senkrecht zum Kanal (7) einen kleineren Strömungswiderstand haben als parallel zum Kanal (7).

6. Element (2) nach Anspruch 5,
**dadurch gekennzeichnet,** daß das Material der Stützelemente (6) ein senkrecht zum Kanal (7) gerichtetes Gewebe ist.

7. Element (2) nach Anspruch 5,
**dadurch gekennzeichnet,** daß das Material der Stützelemente (6) aus senkrecht zum Kanal (7) gerichteten Kapillaren oder Röhrchen aufgebaut ist.

8. Element (2) nach einem der Ansprüche 1 bis 7,
**dadurch gekennzeichnet,** daß die beiden Abdichtungen (4, 5) am Rand durch ein Profilstück (10) miteinander verbunden sind.

9. Element (2) nach einem der Ansprüche 1 bis 8,
**dadurch gekennzeichnet,** daß die Eintritts- und die Austrittsöffnung für das Medium unter Bildung eines Kreislaufes miteinander verbunden sind, und daß in dem Kreislauf der Sensor (18) und eine Pumpe (17, 17a) angordnet sind.

10. Element (2) nach Anspruch 9,
**dadurch gekennzeichnet,** daß der Kreislauf eine verschließbare Zuleitung (23) und eine verschließbare Ableitung (24) aufweist, und daß der Kreislauf zwischen der Zuleitung (23) und der Ableitung (24) ganz oder teilweise verschließbar ist.

11. Element (2) nach einem der Ansprüche 1 bis 10,
**dadurch gekennzeichnet,** daß in einer Leitung (33, 34), die mit der Eintritts- oder Austrittsöffnung verbunden ist, oder in einem Bypass zu dieser Leitung (33, 34) ein Filter (26) zur Aufnahme von Schadstoffen angeordnet ist.

12. Element (2) nach Anspruch 11,
**dadurch gekennzeichnet,** daß der Filter (26) ein katalytischer Filter ist.

13. Element (2) nach einem der Ansprüche 11 oder 12,
**dadurch gekennzeichnet,** daß der Filter (26) von der Leitung (33, 34) abtrennbar sowie bevorzugt mit einer Reinigungsvorrichtung und mit einem Sensor zum Messen der beim Reinigen entfernten Stoffe verbindbar ist.

14. Element (2) nach Anspruch 11, 12 oder 13,
**dadurch gekennzeichnet,** daß der Filter (26) mit einer Heizung (27) versehen ist.

15. Element (2) nach einem der Ansprüche 11 bis 14,
**dadurch gekennzeichnet,** daß der Filter (26) mit Wasserdampf oder Wasser zu beschicken ist.

16. Element (2) nach einem der Ansprüche 1 bis 15,
**dadurch gekennzeichnet,** daß zwei Sensoren (18) vorgesehen sind, von denen der eine Sensor (18) auf Gas und der andere auf Feuchtigkeit anspricht.

17. Element (2) nach einem der Ansprüche 1 bis 16,
**dadurch gekennzeichnet,** daß es mit wenigstens einem weiteren Element (2) ein Feld (F1, F2; F) bildend dicht verbunden ist.

18. Element (2) nach Anspruch 17,
**dadurch gekennzeichnet,** daß die Austrittsöffnung des Kanals (7) des einen Elements (2) mit der Eintrittsöffnung des Kanals (7) des anderen Elements (2) verbunden ist.

19. Element (2) nach Anspruch 17 oder 18,
**dadurch gekennzeichnet,** daß benachbarte Elemente (2) an Schweißstellen (14, 52, 56) miteinander verschweißt sind.

20. Element (2) nach einem der Ansprüche 17, 18 oder 19,
**dadurch gekennzeichnet,** daß die Kanäle (7) benachbarter Elemente (2) über Steckverbindungen miteinander verbunden sind.

21. Element (2) nach einem der Ansprüche 17 bis 20,
**dadurch gekennzeichnet,** daß im Feld (F1, F2; F) die Kanäle (7) mäanderförmig angeordnet sind.

22. Element (2) nach einem der Ansprüche 1 bis 21,
**dadurch gekennzeichnet,** daß mit der Eintritts- oder Austrittsöffnung eine Pumpe (17, 17a) verbunden ist, die intermittierend tätig ist, so daß in den Pumppausen aus der Umgebung Stoff in den Kanal (7) eindringen kann.

## Claims

1. Element (2) for sealing off and monitoring a body (1), having two seals (4, 5) which are connected to one another in a sealing manner at their edges whilst leaving free an inlet opening and an outlet opening for a medium, at least one sensor (18) being connectable to the outlet opening, characterized in that the two seals (4, 5) are arranged spaced apart by support elements (6), in that at least one conduit (7) is formed between the seals (4, 5) and the support elements (6), which conduit connects the inlet opening and the outlet opening to one another, and in that the support elements (6) consist of a material with a known flow resistance which allows throughflow, but hinders flow.

2. Element (2) according to Claim 1, characterized in that the conduit (7) is separated from the adjacent support elements (6) by permeable diffusion layers (9).

3. Element (2) according to Claim 1, characterized in that the conduit (7) is formed by a permeable tube (8) or comprises such a tube (8).

4. Element (2) according to Claim 3, characterized in that the tube (8) is surrounded by a filler material (8a).

5. Element (2) according to one of Claims 1 to 4, characterized in that the support elements (6) have a lower flow resistance perpendicular to the conduit (7) than parallel to the conduit (7).

6. Element (2) according to Claim 5, characterized in that the material of the support elements (6) is a fabric oriented perpendicular to the conduit (7).

7. Element (2) according to Claim 5, characterized in that the material of the support elements (6) is made up of capillaries or tubes oriented perpendicular to the conduit (7).

8. Element (2) according to one of Claims 1 to 7, characterized in that the two seals (4, 5) are connected to one another at the edge by a profile piece (10).

9. Element (2) according to one of Claims 1 to 8, characterized in that the inlet and the outlet opening for the medium are connected to one another forming a loop, and in that the sensor (18) and a pump (17, 17a) are arranged in the loop.

10. Element (2) according to Claim 9, characterized in that the loop has a closable feed line (23) and a closable drainage line (24), and in that the loop can be completely or partially closed between the feed line (23) and the drainage line (24).

11. Element (2) according to one of Claims 1 to 10, characterized in that a filter (26) for receiving pollutants is arranged in a line (33, 34) which is connected to the inlet or outlet opening or in a bypass to said line (33, 34).

12. Element (2) according to Claim 11, characterized in that the filter (26) is a catalytic filter.

13. Element (2) according to one of Claims 11 or 12, characterized in that the filter (26) can be separated from the line (33, 34) and can preferably be connected to a cleaning device and to a sensor for measuring the substances removed during cleaning.

14. Element (2) according to Claim 11, 12 or 13, characterized in that the filter (26) is provided with a heater (27).

15. Element (2) according to one of Claims 11 to 14, characterized in that the filter (26) is to be charged with water vapour or water.

16. Element (2) according to one of Claims 1 to 15, characterized in that two sensors (18) are provided, the one sensor (18) of which responds to gas and the other to moisture.

17. Element (2) according to one of Claims 1 to 16, characterized in that it is connected in a sealing manner to at least one further element (2), forming a field (F1, F2; F).

18. Element (2) according to Claim 17, characterized in that the outlet opening of the conduit (7) of the one element (2) is connected to the inlet opening of the conduit (7) of the other element (2).

19. Element (2) according to Claim 17 or 18, characterized in that adjacent elements (2) are welded to one another at welding points (14, 52, 56).

20. Element (2) according to one of Claims 17, 18 or 19, characterized in that the conduits (7) of adjacent elements (2) are connected to one another via plug connections.

21. Element (2) according to one of Claims 17 to 20, characterized in that the conduits (7) are arranged in a meandering manner in the field (F1, F2; F).

22. Element (2) according to one of Claims 1 to 21, characterized in that a pump (17, 17a) is connected to the inlet or outlet opening, which pump operates intermittently so that a substance from the surroundings can enter the conduit (7) during the pump pauses.

## Revendications

1. Élément (2) pour rendre étanche et contrôler un corps (1), comportant deux garnitures d'étanchéité (4,5), qui sont reliées entre elles étroitement, sur leurs bords, tout en dégageant une ouverture d'entrée et une ouverture de sortie pour un fluide, au moins un capteur (18) pouvant être raccordé à l'ouverture de sortie,
caractérisé par le fait que les deux garnitures d'étanchéité (4,5) sont disposées en étant maintenues à distance l'une de l'autre par des éléments d'appui (6), qu'entre les garnitures d'étanchéité (4,5) et les éléments d'appui (6) est formé au moins un canal (7), qui met en communication l'ouverture d'entrée et l'ouverture de sortie, et que les éléments d'appui (6) sont en un matériau laissant passer un écoulement, tout en le gênant, en ayant une résistance à l'écoulement connue.

2. Élément (2) suivant la revendication 1, caractérisé par le fait que le canal (7) est séparé des éléments d'appui voisins (6) par des couches perméables de diffusion (9).

3. Élément (2) suivant la revendication 1, caractérisé par le fait que le canal (7) est formé d'un tuyau souple perméable (8) ou entoure un tel tuyau (8).

4. Élément (2) suivant la revendication 3, caractérisé par le fait que le tuyau (8) est entouré d'un matériau de remplissage (8a).

5. Élément (2) suivant l'une des revendications 1 à 4, caractérisé par le fait que les éléments d'appui (6) ont une résistance à l'écoulement plus petite perpendiculairement au canal (7) que parallèlement à ce dernier.

6. Élément (2) suivant la revendication 5, caractérisé par le fait que le matériau des éléments d'appui (6) est un tissu disposé perpendiculairement au canal (7).

7. Élément (2) suivant la revendication 5, caractérisé par le fait que le matériau des éléments d'appui (6) est constitué par des capillaires ou des petits tubes dirigés perpendiculairement au canal (7).

8. Élément (2) suivant l'une des revendications 1 à 7, caractérisé par le fait que les bords des deux garnitures d'étanchéité (4,5) sont reliées entre eux par une pièce profilée (10).

9. Élément (2) suivant l'une des revendications 1 à 8, caractérisé par le fait que l'ouverture d'entrée et l'ouverture de sortie pour le fluide communiquent entre elles en formant un circuit et que le capteur (18) et une pompe (17,17a) sont montés dans le circuit.

10. Élément (2) suivant la revendication 9, caractérisé par le fait que le circuit comporte une canalisation d'amenée (23) pouvant être fermée et une canalisation de dérivation (24) pouvant être fermée, et que le circuit peut être fermé en totalité ou en partie entre la canalisation d'arrivée (23) et la canalisation de dérivation (24).

11. Élément (2) suivant l'une des revendications 1 à 10, caractérisé par le fait que dans une canalisation (33,34), qui est reliée à l'ouverture d'entrée ou à l'ouverture de sortie, ou bien dans une dérivation de cette canalisation (33,34) est monté un filtre (26) servant à retenir des substances nocives.

12. Élément (2) suivant la revendication 11, caractérisé par le fait que le filtre (26) est un filtre catalytique.

13. Élément (2) suivant l'une des revendications 11 ou 12, caractérisé par le fait que le filtre (26) peut être déconnecté de la canalisation (33,34) et peut être raccordé, de préférence, à un dispositif de nettoyage et à un capteur pour la mesure des substances éliminées lors du nettoyage.

14. Élément (2) suivant la revendication 11, 12 ou 13, caractérisé par le fait que le filtre (26) est muni d'un dispositif de chauffage (27).

15. Élément (2) suivant l'une des revendications 11 à 14, caractérisé par le fait que le filtre (26) peut être alimenté par de la vapeur d'eau ou par de l'eau.

16. Élément (2) suivant l'une des revendications 1 à 15, caractérisé par le fait qu'il est prévu deux capteurs (18), dont l'un (18) réagit au gaz et dont l'autre réagit à l'humidité.

17. Élément (2) suivant l'une des revendications 1 à 16, caractérisé par le fait qu'il est relié d'une manière étanche à au moins un autre élément (2) en formant un panneau (F1,F2; F).

18. Élément (2) suivant la revendication 17, caractérisé par le fait que l'ouverture de sortie du canal (7) d'un élément (2) est reliée à l'ouverture d'entrée du canal (7) de l'autre élément (2).

19. Élément (2) suivant la revendication 17 ou 18, caractérisé par le fait que des éléments voisins (2) sont soudés entre eux en des points de soudure (14,52,56).

20. Élément (2) suivant l'une des revendications 17, 18 et 19, caractérisé par le fait que les canaux (7) des éléments voisins (2) sont reliés entre eux par l'intermédiaire de liaisons à enfichage.

21. Élément (2) suivant l'une des revendications 17 à 20, caractérisé par le fait que les canaux (7) sont disposés avec une forme sinueuse dans le panneau (F1,F2; F ).

22. Élément (2) suivant l'une des revendications 1 à 21, caractérisé par le fait qu'avec l'ouverture d'entrée ou de sortie communique une pompe (17,17a), qui est actionnée de façon intermittente de sorte que pendant des pauses de la pompe, une substance provenant de l'extérieur peut pénétrer dans le canal (7).
